# EUROPEAN PATENT APPLICATION

(11) **EP 3 115 321 A1**
(43) Date of publication of application: **11.01.2017**
(21) Application number: 15711240.0
(22) Date of filing: 18.02.2015
(51) Int. Cl.: B65G 21/14, B65G 65/00, B65B 43/59, B65B 5/12

(54) **SYSTEM FOR POSITIONING ELEMENTS IN AN ORDERED MANNER**

(30) Priority: 05.03.2014 ES 201430300
(71) Applicant: Tecnia Automatización, S.L.U, 30500 Molina de Segura (Murcia) (ES)
(72) Inventor: HERNÁNDEZ VALVERDE, Antonio, E-30500 Molina de Segura (Murcia) (ES)
(74) Representative: Carvajal y Urquijo, Isabel
(86) International application number: PCT/ES2015/070109
(87) International publication number: WO 2015/132431

(57) **Abstract**

System for placing elements in an orderly fashion, which comprises a conveyor belt (1) variable in length that projects or retracts itself to convey and deposit elements; a separator (3) for selecting an active container and separating at least the active container from a plurality of stacked containers, thus creating a gap that enables the insertion of the conveyor belt (1). The separator (3) and the conveyor belt (1) are coordinated such that, the conveyor belt (1) is designed to vary in length by either projecting or retracting itself as the elements pass from the conveyor belt (1) to the active container

## Description

### Technical field of the invention

The invention relates to a system for arranging elements in an orderly fashion into a container, a tray or similar.

### Background of the invention

Currently, there is a multitude of elements, goods and products that must be subjected to different processes in different locations and need to be conveyed for this purpose by means of conveyor belts. In the logistics sector, they are used quite often. Likewise, in the food, pharmaceutical, chemical or cosmetic industries, there are products that must undergo pasteurisation and/or sterilisation processes before their marketing and consumption. These products may have very different features.

Usually to process the products, they have to be conveyed between different locations by means of conveyor belts, also referred to as endless belts. Whilst they are in operation, some of these conveyor belts may modify their speed. By contrast, to our knowledge, they do not allow changes in their constitution. They are limited to the essential function of conveying elements continuously.

Nevertheless, sometimes, the processes associated with the elements conveyed on a conveyor belt require to be placed in an orderly fashion for their ulterior treatment (packaging, cooking, sterilisation, conditioning, packing, etc.). Known conveyor belts, do not have enough functionalities to carry out this kind of additional tasks and use to leave them piled up.

Generally, it involves products conditioned in different packagings, such as rigid, semi-rigid and flexible packagings. They may also vary in shape, i.e., cylindrical, square, truncated conical packagings and are subjected to processes.

If the packagings are rigid and metallic, they can be handled with a movable magnetic plate, by magnetizing their upper portion and depositing them somewhere else.

With rigid non-metallic packagings, a drive system that moves the packagings from the conveyor belt to another place can be used. It is also possible to pick non-metallic packages by their upper portion using a suction system provided with a suction plate (by air). Another option is to employ systems with mechanical or electromechanical clamps.

By contrast, when the packagings are flexible their handling becomes more difficult. These packagings, composed by different sheets of polymer welded at their seams, with different finishes, shapes, etc. have a high variety of mechanical properties, and in addition, they vary according to the product packaged inside. Flexible packagings are used more and more often because of their advantageous characteristics (appealing, lower distribution costs, easy to handle when they are empty, easy to open, require shorter heat processing, portable, microwaveable, etc.).

The truncated conical packagings also present difficulties for being positioned in an orderly fashion given their shape, since when they are grouped they lose their verticality.

Regarding the container, tray or similar, they are positioned stacked so they can be easily moved, but they have to be separated in order to deposit the products inside them. The method that is currently used is to separate the tray, (method commonly known as unstacking), from the remaining trays, move that tray to another location where the products are deposited inside it and placing the tray back with the rest of the stacked trays, (method commonly known as stacking).

### Brief description of the invention

In view of the limitations observed, a system to place elements in an orderly fashion would be desirable. It would also be advantageous for it to be capable of interacting with the containers where the elements are going to be deposited (for instance, trays or platforms) in order to increase speed and accuracy.

The present invention proposes a system for placing elements in an orderly fashion that includes a conveyor belt, variable in length, for conveying and depositing elements; a separating device to select an active container and separate al least the active container from other stacked containers, thus creating a gap that enables the insertion of the conveyor belt. The separator and the conveyor belt are coordinated such that, the conveyor belt may vary in length by either projecting or retracting itself as the elements pass from the conveyor belt to the active container For this purpose, the speed at which the belt projects/retracts, the speed of the elements on the belt can be adjusted according to the element and container type and/or the desired spacing between elements.

Optionally, it may include a mobile module associated with the conveyor belt, the mobile module being capable of moving sideways the conveyor belt in order to place an additional row of elements into the active container.

Optionally, the mobile module associated with the conveyor belt may move vertically the conveyor belt up to where a new active container is located.

Optionally, the separator is capable of selecting and separating a new active container when the conveyor belt is in its retracted or projected position.

Optionally, the separator is provided with arms to handle at least two containers simultaneously.

Optionally, the length variation of the conveyor belt is a function of the linear speed of the belt of the conveyor belt. In this way, it is possible to prevent the elements from piling up in the container or being poorly distributed.

Optionally, the length variation of the conveyor belt is a function of the container size. For example, that way it is possible to use the entire usable area of the container to deposit elements.

Optionally, the length variation of the conveyor belt is a function of the element variety. It is possible to adapt it to different types of items having diverse shapes and volumes.

### Brief description of the figures

FIG. 1A: Is a longitudinal sectional view of the conveyor belt.
FIG. 1B: Is a perspective view of the conveyor belt.
FIG. 2A: Is a perspective view of the mobile module associated with the conveyor belt.
FIG. 2B: Is a side view of the mobile module.
FIG. 2C: Is a top view of the mobile module.
FIG. 3A: Is a perspective view the tray separator, on site.
FIG. 3B: Is a side view of the tray separator.
FIG. 3C: Is a top view of the tray separator.

### Detailed description of the invention

With reference to the previous figures, a non-limiting exemplary embodiment is set forth for clarity purposes.

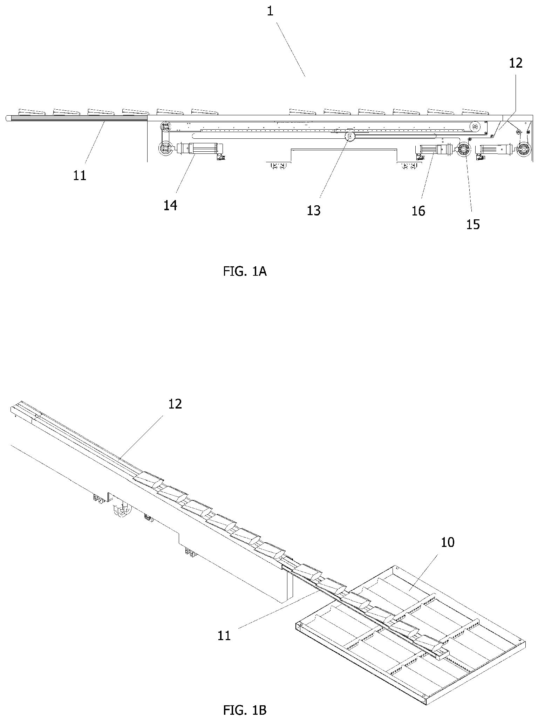

In FIG. 1A, a sectional view of the conveyor belt **1** is shown, in which some of its elements can be observed. In particular, a guide **11** that is projected longitudinally varying the length of the endless belt **12.** The mechanism that enables the extension is mainly formed by a first motor **14,** which activates the guide **11** and a second motor **16,** which activates a motor roller **15** for driving the endless belt **12** so as to make it extensible and retractable. An idler pulley **13** keeps the endless belt stretched. FIG. 1B depicts a perspective view of the same conveyor belt **1** depositing elements into a tray **10**. The elements, flexible packagings in this case, are deposited directly into a stackable tray without having to group the packagings previously or picking them up. This way, it is possible to do without additional systems such as mechanical clamps or suction systems, which are slower and more complex.

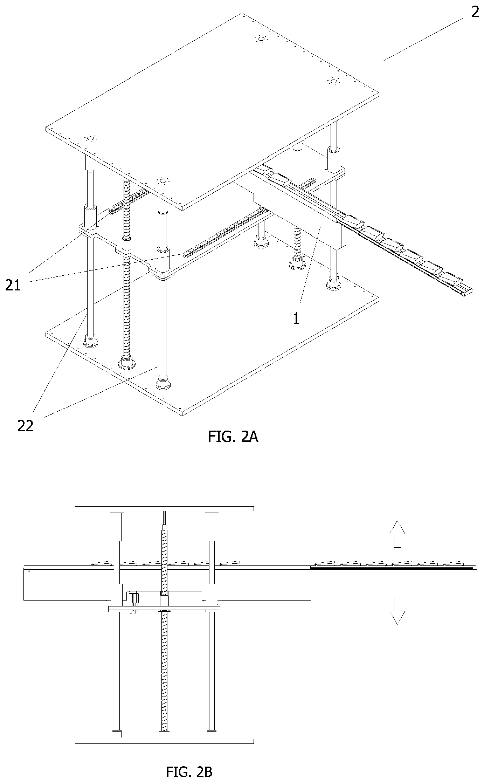

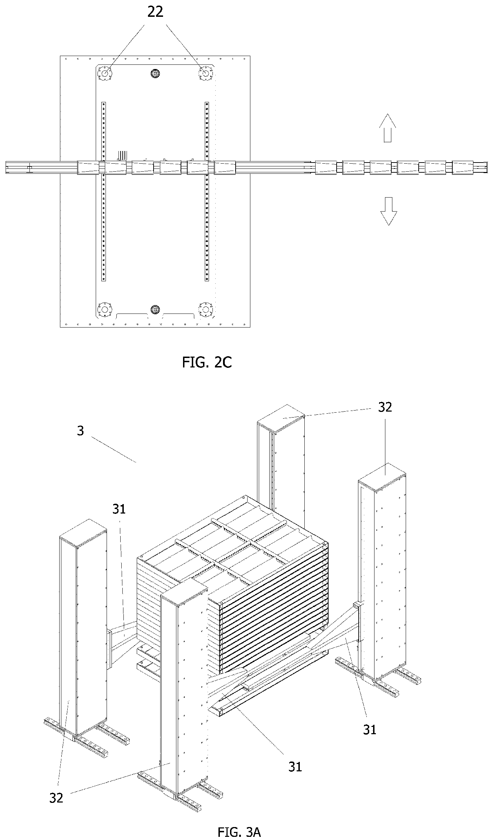

FIG. 2A shows a perspective view of a mobile module **2** where the conveyor belt **1** is to be mounted so it can move vertically and sideways. In FIGS. 2B and 2C a side and a top view of said mobile module can be observed, wherein the motion is signalled with arrows. A lifting support **22** is responsible of the vertical motion; insofar a pair of side moving guides **21** transmits a lateral movement.

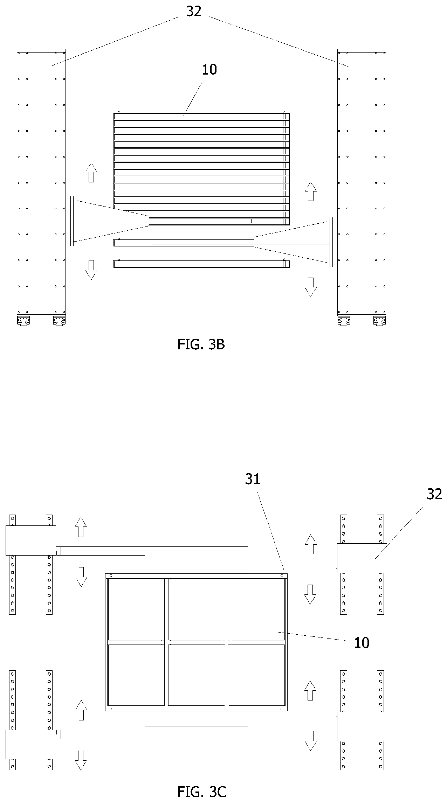

FIG. 3A illustrates the separator **3** that enables creating between the trays **10** or containers a space for the insertion of the conveyor belt **1** by means of arms **31,** which select a tray, hold it whilst they separate the tray from the other trays stacked above. In FIGS. 3B and 3C a side and a top view can be observed, wherein the motion of the arms is signalled with arrows.

Below, the operation relating to a manufacturing plant that works with flexible packagings is described. It should be understood that the present embodiment might be employed in numerous domains where it is necessary to convey elements, goods, products, etc., in an orderly fashion, with a conveyor belt and deposit them in stackable containers or trays.

To insert the product into the packaging it is not necessary to unstack the trays and move them to another place. The tray **10** separator **3** operates on site separating the trays from one another and enabling to insert directly the conveyor belt **1**.

On one hand, the flexible packagings coming from filling machines, which approach forming a row with a given separation and at a given speed, are collected by the conveyor belt **1,** which is extensible and retractable in a longitudinal direction, that places the packagings preferably with no separation between them, inside an active tray **1,** in parallel rows, which complete the tray area.

The insertion is carried out through one of the sides of the tray; the conveyor belt **1** is located above the tray on one end and extends until reaching the opposite side of the tray, where it will start leaving the first row of packagings. At the same time, the packagings advance on the endless belt at a given speed and with a given separation, so when the first packaging reaches the end, it falls by gravity into the active tray **10,** the belt **1** retracts so there is enough distance such that the following packaging falls contiguous to the previous one and they stay together. This process is repeated until completing the row. Once the row has been completed, the belt **1** moves horizontally to position itself in the second row position and simultaneously it extends again in order to reach the level at which the first packaging of that row is to be left, as described above, on the opposite side. When it initiates the extension, the linear extension velocity is greater that the linear velocity of the belt conveying the packagings and prevents the packagings from falling in the wrong location. The row insertion process is repeated until completing all the rows of a tray.

Moreover, the trays **10** are provided empty and stacked vertically in groups of a given number. This stack of trays is located in a static position. The trays separator **3 runs** on site and preferably consists of four arms **31** that operate in two sets of two synchronized parallel arms and each one is capable of moving horizontally.

These two sets of arms **31,** which operate independently from each other, are located at both sides of the stack of trays with a vertical travel running from the lowest tray to the uppermost tray of the stacked trays. The support of the lifter **32** is also capable of moving horizontally, which enables the arms insertion into the tray **1** at both sides and to support in this way the tray so it can be lifted. When the lifting movement is carried out with a set of two arms **31,** the tray in which the claws have been inserted is lifted as well as, the trays stacked above, thus creating a gap or separation distance between the lifted trays and those that remain below. Given that there is another set of arms **31,** which has exactly the same functionality, it is possible to create another gap between the trays.

Below there is an example with a stack of ten trays, for a better understanding thereof:
The trays are numbered from bottom to top, from the 1^{st} to the 10^{th}. A set of arms lifts the 2^{nd} tray and leaves a gap between the 2^{nd} and the 1^{st}, if the other set of arms lifts the 3^{rd} tray, it will leave a gap between the 3^{rd} and the 2^{nd} tray. Two gaps have been created, between the 1^{st} and the 2^{nd} tray, and between the 2^{nd} and the 3^{rd} tray. If the first set of arms comes down and leaves the 2^{nd} tray next to the 1^{st}, these arms will then be free and come up until the 4^{th} tray, and lift it thus creating a gap between the 4^{th} and the 3^{rd} tray. In this position, there are two gaps between the 2^{nd} and the 3^{rd} and between the 3^{rd} and the 4^{th} tray. If this sequence is repeated two contiguous gaps will be created from the 1^{st} tray to the 10^{th} tray. Each set of arms may lift from below the lowest tray to above the uppermost tray, from the 1^{st} to the 10^{th} in the previous example and creates gaps between the trays. To change the stack of trays, the sets of arms move below or above the first and the last tray and there is an obstacle-free area around the stack of trays so it can be replaced whenever the process that is being carried out with it finishes.

As it can be appreciated, the belt **1** mounted on the mobile module **2** and the trays separator **3** operate interacting in a synchronised manner. The separator **3** creates the gaps between the trays **10,** which are stacked and empty, while, the belt **1** deposits the packagings into the trays in an orderly fashion.

### Interaction between the devices:

A set of arms **31** of the tray separator **3,** separates one tray **10** from the remaining trays thus creating a gap and the other set of arms **31** creates another contiguous upper gap between the trays. The belt **1** modifies its structure in a longitudinal direction so as to deposit the packagings in rows on an empty tray **10** in the first gap, to this end it extends above the active tray **10** and retracts gradually to deposit the packagings on it. It is also capable of moving horizontally thanks to the mobile module **2,** so once a row has been deposited on the tray **10,** it moves on to the next parallel row, repeating this process until completing all the rows in the tray **10**. At that moment, the first and second set of arms **31** come down in a synchronised manner thus eliminating the first gap by joining the trays together and liberating this set of arms. Simultaneously, the belt **1,** which is capable of moving vertically thanks to the mobile module **2,** moves to the level where the gap is, which previously was the second gap, and initiates its cycle of depositing packagings on this empty tray and the set of arms, which was previously the first one, creates another gap above the tray on which the packagings are now being deposited. These cycles are repeated until completing all the trays **10** of a stack.

In conclusion, the proposed system offers, among others, these advantages:
- It does not require grouping the elements previously for their insertion since they are deposited directly on the area of interest (which may be a tray) as they come thus avoiding eventual deformations.
- It is not affected by the packaging shape, the material in which the packaging is made, the weight or temperature thereof, etc. since they are conveyed on an endless belt, which inserts them directly into the tray without the intervention of any additional device and/or apparatus.
- It has a very high rate of packaging insertion since they are inserted directly into the tray in a continuous manner and is not necessary to pick them up, or move them, thus involving a minimum work cycle.
- It is a modular and flexible system given that it is possible to place one or more devices in parallel, making the system flexible with respect to its production over time.
- It does not require unstacking the trays and lining them up, one by one, in order to deposit packagings on them. The gaps are created in the stack itself, with the resulting space optimisation.
- By creating the gap in the stack itself, the cycle times are significantly reduced, thus allowing a much higher production rate.

It should be understood that is possible to use various alternatives, modifications and equivalents. Therefore, the present invention shall not be considered as limiting the scope of the invention, which is defined by the appended claims. Reference numerals
1 Conveyor belt.
10 Tray.
11 Guide.
12 Endless belt.
13 Idler pulley.
14 First motor.
15 Motor roller.
16 Second motor.
2 Mobile module.
21 Side moving guide.
22 Lifting support.
3 Separator.
31 Arm.
32 Lifting support.

## Claims

1. A system for placing elements in an orderly fashion, **characterised in that** it comprises:
- a conveyor belt (1) variable in length designed to convey elements,
- a separator (3) designed to select an active container and separate al least the active container from a plurality of stacked containers, thus creating a gap that enables the insertion of the conveyor belt (1),
wherein the separator (3) and the conveyor belt (1) are coordinated such that, the conveyor belt (1) is designed to vary in length by either projecting or retracting itself as the elements pass from the conveyor belt (1) to the active container

2. The system according to claim 1, **characterised in that** it comprises a mobile module (2) associated with the conveyor belt (1) designed to move sideways the conveyor belt (1) for placing an additional row of elements into the active container.

3. The system according to claim 1 or 2, **characterised in that** it comprises a mobile module (2) associated with the conveyor belt (1) designed to move vertically the conveyor belt (1) up to a new active container.

4. The system according to any one of the preceding claims, **characterised in that** the separator (3) is designed to select and separate a new active container when the conveyor belt (1) is in its retracted or projected position.

5. The system according to any one of the preceding claims, **characterised in that** the separator (3) comprises arms (31) for handling at least two containers simultaneously.

6. The system according to any one of the preceding claims, **characterised in that** the length variation of the conveyor belt (1) is a function of the belt linear speed of the of the conveyor belt (1).

7. The system according to any one of the preceding claims, **characterised in that** the length variation of the conveyor belt (1) is a function of the container size.

8. The system according to any one of the preceding claims, **characterised in that** the length variation of the conveyor belt (1) is a function of the type of element.
